# EUROPEAN PATENT APPLICATION

(11) **EP 1 771 003 A1**
(43) Date of publication of application: **04.04.2007**
(21) Application number: 05425677.1
(22) Date of filing: 29.09.2005
(51) Int. Cl.: H04N 7/173, H04N 7/16

(54) **Multiple interactivity enabling technology in a DVB-T environment**

(71) Applicant: Siemens Informatica S.p.A., 20126 Milan (IT)
(72) Inventor: Cagnoni, Giangiuseppe, Dr., 27100 Pavia (IT); Morganti, Michele, 20136 Milano (IT)

(57) **Abstract**

An interactive DVB-T system includes: a) a Service Centre for broadcasting composite television signals constituted by TV programmes with associated specific interactive data; b) a set-top box for decoding the interactive data associated to the tuned television channel; c) one or more GPRS/UMTS cellular phones short-range located to the set-top box; d) Bluetooth ® interfaces inside both the set-top box and the cellular phones. The operation takes place through the following steps: a) the set-top box and every interested cellular phone shall provide to install its own software application devoted to manage the interactivity; b) the set-top box shall locate every cellular phone active in its neighbours and authorize the respective user (upon request) to join the community (ad hoc group); c) the set-top box shall send through the Bluetooth channel to the existing and authorized cellular phones the list of the choices that can be made by the respective users, giving them the chance to vote; d) the received list shall be displayed on the screen of the cellular phones; e) once a vote is expressed, the cellular phone shall immediately set up a GPRS/UMTS channel towards the mobile radio network and transmit the voting information to the Service Provider; f) the cellular phone shall wait for a response from the Service Provider confirming the acceptance of the poll. Right data bought by the user to enjoy an opportunity selected from the displayed menu are stored in the SIM card, this allows to exploit the acquired rights with other set-top boxes (fig.2).

## Description

### FIELD OF THE INVENTION

The present invention relates to the field of the interactive television, and more precisely to a Multiple Interactivity Enabling Technology in a Terrestrial Digital Video Broadcasting (DVB-T) System.

### BACKGROUND ART

According to an ETSI (European Telecommunications Standards Institute) Internet publication: "The Digital Video Broadcasting Project (DVB) is an industry-led consortium of over several broadcasters, manufacturers, network operators, software developers, regulatory bodies and others in many countries, committed to designing global standards for the delivery of digital television and data services. The DVB standards cover all aspects of digital television from transmission through interfacing, conditional access and interactivity for digital video, audio and data. The consortium came together in 1993 to create unity in the march towards global standardization, interoperability and future proofing. To date, there are numerous broadcast services using DVB standards. Hundreds of manufacturers offer DVB compliant equipment, which is already in use around the world. DVB dominates the digital broadcasting world. A host of other services is also on-air with DVB-T (Terrestrial), DVB-S (Satellite) and DVB-C (Cable) including data on the move and high-bandwidth Internet over the air". Further information about DVB can be found at: www.dvb.org under limitation that only DVB-T is concerned with the present invention. DVB-T will soon replace the ancient analogue terrestrial television everywhere in the world. In practice, a lot of new digital channels will occupy the UHF and VHF bands traditionally assigned to the domestic television broadcasting. The number of programmes offered to the domestic/resident users are considerably increased by the advent of the new DVB-T channels, this encourages the appearance of new services and new providers. Pay-per-viewing, polling, voting, betting, quiz answering, tele-shopping, TV auctions, t-banking, t-government, etc., constitute known examples of possible use of the interactive television trough the DVB-T channels.

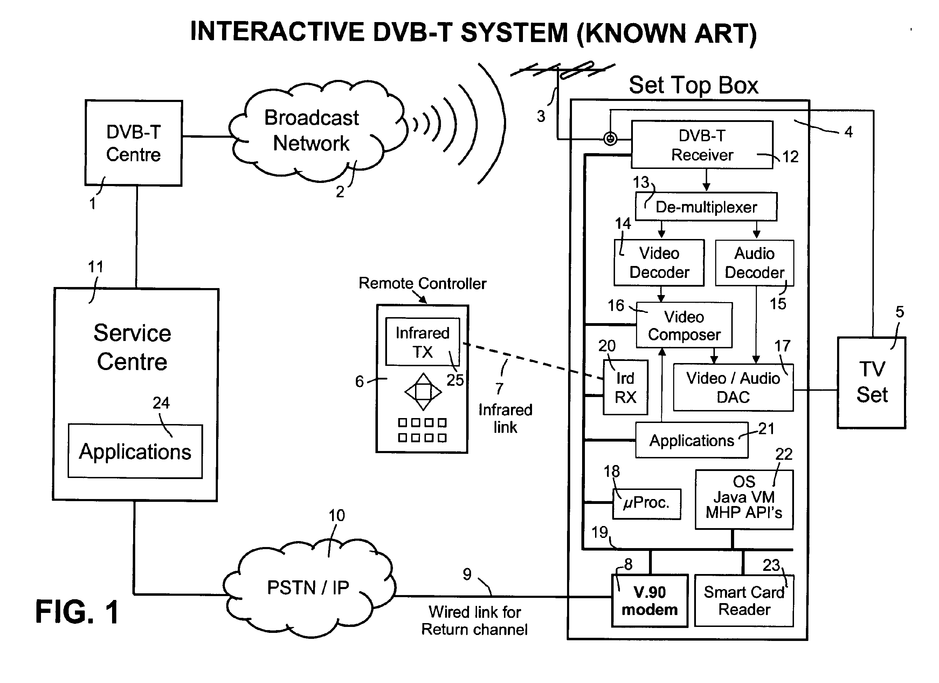

**Fig.1** shows an interactive DVB-T system of the prior art. With reference to **fig.1,** the depicted DVB-T system includes a DVB-T Centre 1 from which digital television signals (MPEG) including interactive data are broadcast towards domestic/resident users via a Broadcast Network 2. At the user premises the television signal is received by an antenna 3 (Yagi) connected both to a TV Set 5 and to DVB-T signal decoder 4 called Set-Top Box (STB). The connection of the antenna 3 to the TV Set 5 is only for receiving during the migration time the existing analog TV channels and does not impact with the invention. The set-top box 4 is connected to the TV set 5 by a Scart plug (not indicated). A Remote Controller 6 is connected to the set-top box 4 through an infrared link 7. The Remote Controller 6 enables the user/subscriber to exploit interactive data embedded in the received television signal. A V.90 modem 8 inside the set-top box 4 is connected to a telephone line 9 by means of a three-pole plug (not indicated). Line 9 is the twisted pair used for telephone calls, now additionally used to provide a return channel for carrying the interactive data of the subscriber towards a Service Centre 11 via the PSTN//IPN (Public Switched Telephone Network / Internet Protocol Network) 10.

The set-top box 4 includes a digital Receiver 12 which is tuned on the desired TV channel and performs all those known operations for obtaining a baseband audio-video signal to be forwarded to an Audio/Video Demultiplexer 13. Both video and audio signals at the two outputs of Demultiplexer 13 reach the inputs of a Video Decoder 14 and an Audio Decoder 15, respectively. The decoded video signal enters a Video Composer 16. The outputs of the Audio Decoder 15 and the Video Composer 16 are connected to respective inputs of a Video/Audio DAC (Digital-to-Analog Converter) 17. The analog video and audio signals at the output of the DAC 17 are forwarded to the TV Set 5 by means of the Scart plug. A microprocessor 18 is connected to a respective bus 19 in order to control the following main functional blocks inside the Set-top box 4: the digital Receiver 12, the Video Composer 16, an Infrared receiver 20, a first and a second memory 21 and 22, a Smart Card Reader 23, and the V.90 modem 8. The smart card reader 23 provides an interface towards the microprocessor 18 for enabling the set-top box 4 to acquire individual subscriber information stored in a card.

The first memory 21 stores the interactive software Applications of the system. These applications are either transmitted by the Service Centre 11 through the PSTN/IP network 10 and the twisted pair 9 or preferably they are broadcast by the DVB-T Centre 1 through the Broadcast Network 2. The Service Centre 11 is connected to the DVB-T Centre 1 to facilitate the broadcast of applications. The Service Centre 11 might be considered also including the DVB-T Centre. The second memory 22 stores the Operating System (OS) of the microprocessor 18, hosts Java Virtual Machine (VM) and MHP (Multimedia Home Platform) API's (Application Programme Interface). The Video Composer 16 fills up a buffer screen to obtain a composite presentation including the tuned television program and the associated interactive information according to different modalities, such as commanded switching between programs and menu, picture-in-picture, overlapping with transparency. The Remote Controller 6 includes an infrared transmitter 25 and a keyboard with navigation and confirmation buttons.

In operation, a preliminary step is needed to download the most recent version of the interactivity software application from the broadcast channel 2 to the Set-top box 4. This is performed either automatically or on request. After which the user who is currently viewing a programme and is inclined to express a preference, selects a menu window on the TV screen by means of his remote Controller 6, then selects a particular choice in a sub-menu and press the confirmation button to send back interactive data on the wired return channel 9, automatically. This is valid for all charge-free interactive applications (e.g. voting), while in order to get an interactive service which request a payment (e.g. pay-per-view), another preliminary step to confirm the money transaction must be performed. Transactions are generally simplified by the use of prepaid Smart Cards.

### OUTLINED TECHNICAL PROBLEM

**Fig.1** represents the typical model of a DVB-T interactive environment having the TV set as the output device both for the TV programmes and the application data, and the STB remote controller as the input tool to give commands to the application. This approach fits perfectly with every application designed in a one-to-one model (like pay-per-view, t-banking or t-government cases), but doesn't fit in a one-to-many model (like all the polling cases or even TV auctions) since in all these cases a personal choice of every watcher of the same programme is meaningful. In the one-to-many model the unique wired return channel of the set-top box constitutes a bottleneck for all individual choices.

### OBJECT OF THE INVENTION

The main object of the present invention is that to overcome the defect of the prior art and indicate an improved video broadcasting interactive system able to provide a collective fruition of audio-video contents through the TV set and a personal interaction to express choices.

### SUMMARY AND ADVANTAGES OF THE INVENTION

The invention achieves said object by providing an interactive video broadcasting system, as disclosed in claim 1. Additional advantageous features are described in the dependent claims.

The system of the invention includes:
- a Service Centre for broadcasting composite television signals constituted by TV programmes with associated specific interactive data;
- a television signal decoder, called set-top box, for decoding the interactive data associated to the tuned television channel;
- at least a cellular phone having data transmission capability;
- short-range wireless data communication means inside both the set-top box and the cellular phone;
- processor means of said cellular phone controlling said short-range wireless communication means for transferring interactive data from the set-top box and displaying an interactive menu on the telephone screen;
- selection tools of said cellular phone for enabling the user to select an item of the menu and sending back the item information to the Service Centre through an embedded data channel, automatically.

Advantageously the embedded data channel is compliant with GPRS (General Packet Radio Service) standard. As known, GPRS was introduced to provide GSM (Global System for Mobile communications) with packet data transmission capability. The GPRS concepts, upon some modifications to agree with a different physical channel, are also adopted in the UMTS (Universal Mobile Telecommunication System) standard.

Advantageously the short-range wireless data communication channel is compliant with the Bluetooth ® technology. It can be appreciated how the Bluetooth channel, generally foreseen as wireless-serial-cable replacement for headset and microphone, is now managed by the software applications for the specific usage of television interactivity. Different short-range technologies can be adapted as soon as they become widely adopted by the market.

The system of the invention further includes memory means inside both the set-top box and the cellular phone for storing respective software applications related to the interactivity.

According to an embodiment of the invention, the software application resident in the set-top box is downloaded from the air through the broadcasting channel.

According to an embodiment of the invention, the software application resident in the cellular phone is downloaded through Internet.

According to another embodiment of the invention, the software application resident in the cellular phone is downloaded from the set-top box through said short-range wireless communication means.

According to another embodiment of the invention, the software application resident in the cellular phone is obtained via OTA (Over The Air) distribution through the Telecommunication Operator.

In its greatest generality the present invention may cover both analog and digital interactive television systems, but DVB-T is obviously preferable as its decidedly improved handling of the interactive data together with a drastic reduction of the channel band. In case of analog television the interactive data are transmitted during the Vertical Blanking Interval (VBI) of the frame return adopting a Teletext standard (TTX).

Advantageously the present invention fits both with domestic/residential and public environments (bar, betting shop, etc) where many people can enjoy the same programme expressing personal choices (multiple interactivity). The interactivity with the voting, betting, auction, telemarketing, and other main applications flows through wireless data connections with different technologies (e.g. DVB, Bluetooth, GPRS).

According to an aspect of the invention, the cellular handy-phone is used both as a personal remote controller to perform individual choices from a collective fruition and personal modem to send back the individual choices, automatically. The traditional remote controller could still remain together with the V.90 modem embedded in the set-top box for the only users that (notwithstanding the innovation) will still prefer the old fashioned interactivity. In any case, the traditional remote controller and V.90 modem are not part of the present invention. The interactions between the cellular phone and the set-top box and between the cellular phone and the IP network make telemarketing possible in a DVB-T scenario. Considering that the SIM (Subscriber Identity Module) card inside the cellular phone can store personal data of the owner in a secure way, reliable transactions can be handled to buy goods or services. Besides, the SIM lets the users keep right data of acquired goods to be used interacting with other set-top boxes. So, the rights to purchase a good or access a special TV event can be bought by a user, stored in his SIM card and used (the rights) with another set-top box through the displayed menu.

Because of the peculiar features included in the cellular phone in order to give support to the interactivity, another object of the invention is a cellular phone in such a way arranged.

Correct and reliable interactions between the various elements of the interactive television system need a co-ordinate information exchange, as described in the following steps:
- the set-top box and every interested cellular phone shall provide to install its own software application devoted to manage the interactivity;
- the set-top box shall locate every cellular phone active in its neighbours and authorize the respective user (upon request) to join the community (ad hoc group), provided that the cellular phone has the specific application on board;
- the set-top box shall send to the existing and authorized cellular phones the list of the choices that can be made by the users, giving them the chance to vote;
- the received list shall be displayed on the screen of the cellular phones;
- once a vote is expressed the cellular phone shall immediately set up a data communication channel towards the mobile radio network and transmit the voting information to the Service Provider;
- the cellular phone shall wait for a response from the Service Provider confirming the acceptance of the poll.

With that, other object of the invention is a method to introduce full wireless interactivity in a broadcasting television system.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, shows an interactive DVB-T system of the prior art;
- **fig.2** shows a GPRS-interactive DVB-T system of the present invention;
- **Figures 3a, 3b, 4,** and **5** show some flow charts of the method of the present invention for introducing interactivity in a broadcasting television system.

### DETAILED DESCRIPTION OF AN EMBODIMENT OF THE INVENTION

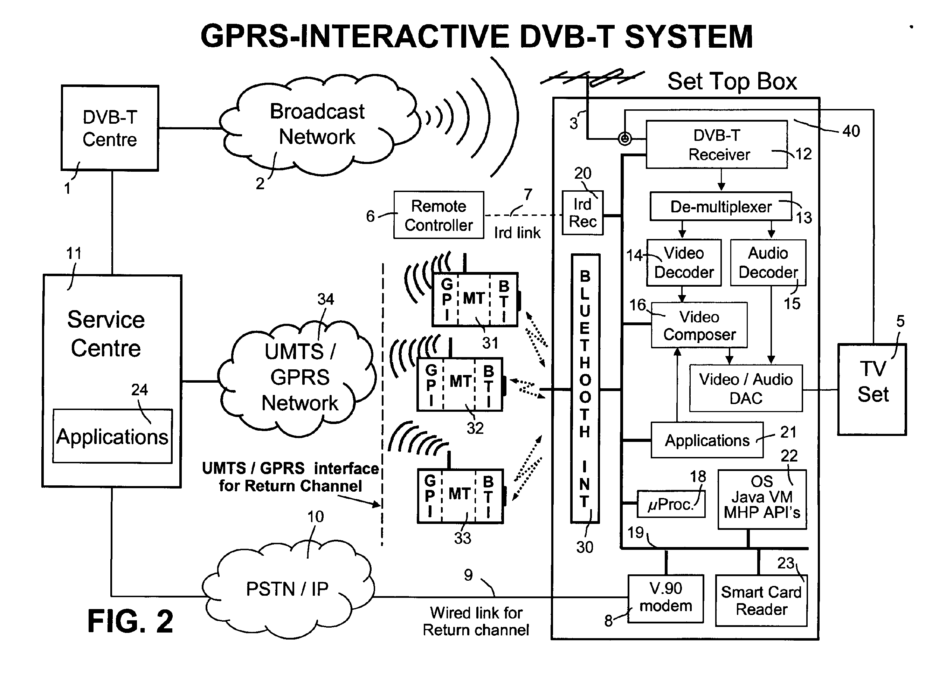

As a description rule, same elements in the drawings are referenced by the same labels. **Fig.2** differs from **fig.1** by the presence of the following elements:
- An UMTS/GPRS Network 34 connected to the Service Centre 11 and to a plurality of UMTS/GPRS cellular phones 31, 32 and 33.
- A Bluetooth interface 30 connected to the microprocessor bus 19 of a Set-top box 40.
- A companion Bluetooth interface BTI inside each cellular phone MT (Mobile Terminal).
- A GPRS Interface GPI inside each cellular phone MT for communicating with the UMTS / GPRS network 34.
- The content of the memory 21 (and of a memory of each cellular phone MT) for giving support to the new interactive scenario.

Without limitation, the Bluetooth interface can be replaced with any other reliable short-range communication technology, like: WiFl (Wireless Fidelity), UWB (Ultra Wide Band), IrDA (IrDA Infrared Data Association), etc.

Bluetooth implements a wireless protocol operating in the 2.40 to 2.48-GHz ISM (Industrial, Scientific, and Medical) RF band. Bluetooth uses frequency-hops among 79 channels, 1-MHz wide, evenly spaced across the band to contrast interference and selective fading, making more robust the link. The Forward Error Correction (FEC) further reduces the side effect of the random noise. Full-duplex TDD (Time Division Duplexing) is used in a time frame with time slots of 625 µs duration. Voice/data bits are packetized and each packet is transmitted with a different frequency hop. Usually a packet cover a time slot, but can be extended up to five slots. The Bluetooth protocol uses both packet and circuit switch embedded in time slots bearing either synchronous or asynchronous packets. A Bluetooth system is schematized by a cascade of three blocks: a radio unit; a link control unit; and a link management support unit having interface and I/O functions towards a host terminal. The radio link is either point-to-point or point-to-multipoint. In the first case two Bluetooth units only are involved. In the second case the channel is shared between more units constituting a piconetwork (piconet). A Bluetooth unit acts as the master of the piconet (the Set-top box 40), while the other units as slaves. Relevant specifications are listed in "Bluetooth^{®} Specification Guideline", Revision 1.1r02, dated 2005-03-15, prepared by Bluetooth SIG (Special Interest Group), Inc. Other arguments are retrievable connecting to **www.bluetooth.org.**

As an alternative to Bluetooth, the WiFi (Wireless Fidelity) technique described in IEEE 802.11b specification could be used. WiFi shares the same frequency band as Bluetooth, but they are not exactly market competitors. WiFi uses one of 12 overlapping channels of 22-MHz bandwidth either FHSS (Frequency Hopping Spread Spectrum) or DSSS (Direct Sequence Spread Spectrum). The WiFi protocol is becoming standard in PCs and laptop computers.

The GPRS is described in GSM 03.60, titled: "General Packet Radio Service (GPRS) Service description" - Stage 2 - version 7.1.0, Release 1998, (corresponding to 3GPP 23.060). GPRS is a service designed to support a data transfer ranging from the intermittent and burst type up to the occasional transmission of a great volume of data. Different quality of service (QoS) profiles are foreseen. The taxation is generally based on the amount of data transferred. The allocation of GPRS channels is flexible, for instance: 1 to 8 time-slots of the radio interface can be allocated within the TDMA frame (Time Division Multiple Access), the time-slots are shared by active users and are separately allocated up and downlink. Applications based on standard point-to-point and point-to-multipoint data protocols are supported, so as interworking with IP (Internet Protocol) networks is defined. The sub-set of MAC (Medium Access Control) procedures governing the dynamic allocation of resources, provides temporary connections on the physical layer, called TBF (Temporary Block Flow), which include memory buffers to house the queues of RLC (Radio Link Control)/MAC blocks. Each TBF connection enables the point-to-point unidirectional transfer of data and user signalling within a cell, between the network and a mobile terminal MT, or vice versa. Control messages for the establishment/abatement of a connection and the allocation/de-allocation of relevant support physical resources, for instance of TBF buffers, contemplates different opportunities capable of covering the whole survey foreseen in the packet transfer mode of the RRM (Radio Resource Management) layer.

The system of **fig.2** operates in accordance with a method described with the help of the remaining figures. In operation, the overall application is structured in three components:
- one residing in the Service Centre 11;
- one residing in the Set-top box 40;
- one residing in the mobile phones 31, 32, and 33.

The application that must reside in the Service Centre 11 also includes the two residing in the Set-top box 40 and in the mobile phones 31, 32, and 33. The application that must reside in the Set-top box 40 is downloaded from the air through the broadcast channel. The application that must reside in the mobile phones 31, 32, and 33 can be loaded through different channels, depending on the business models that can be defined. The preferred way is downloading the application from the Internet through the UMTS/GPRS Network 34. Another possible way is downloading the application from the Set-top box 40 through the Bluetooth connection. The application resident in the cellular phones (but also in the Set-top box 40) can be advantageously constituted by a Java applet (or even by a Windows Xlet). A Java applet is a short program embedded in the HTML pages downloaded from a WEB site capable to run at the Client side. Like all the Java code, the applets run over a lot of platforms (as the MHP API's stored in the memory 22).

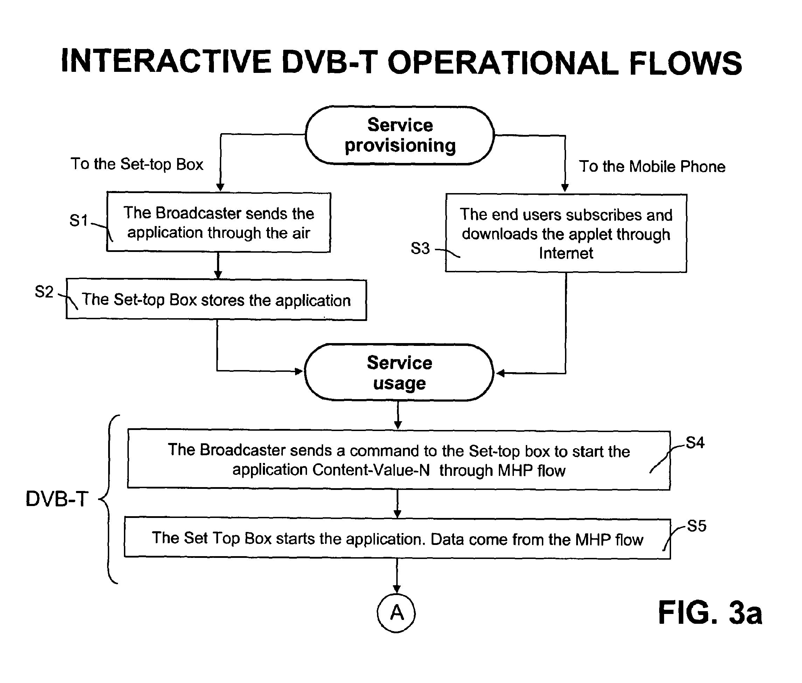

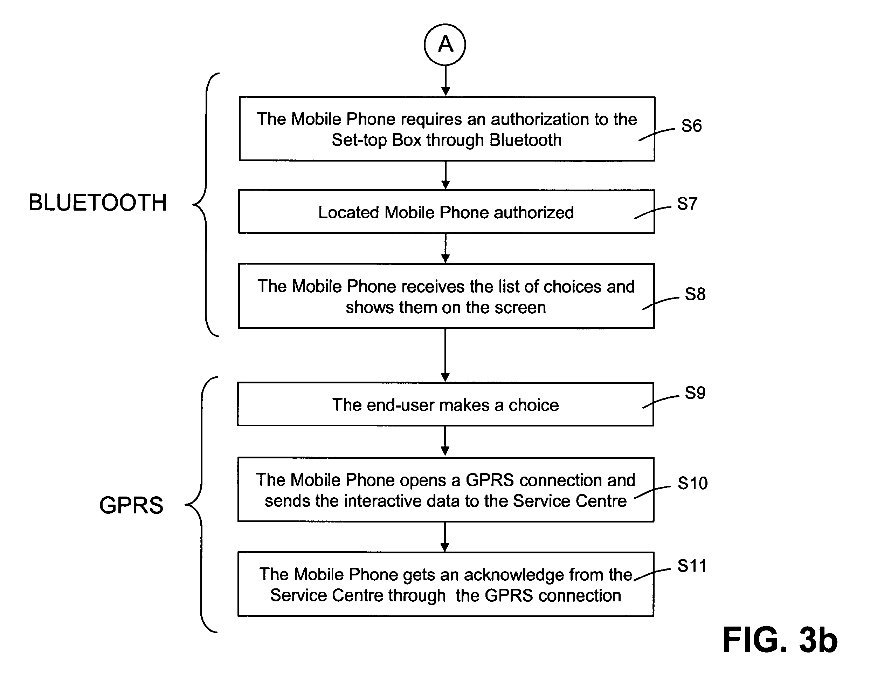

With reference to the **figures 3a** and **3b,** the flow-chart is subdivided in two consecutive sections called "Service provisioning" and "Service usage". Service provisioning includes two branches towards the Set-top box 40 and the Mobile (cellular) phones 31, 32, and 33, respectively. The first branch includes two steps S1 and S2, the second branch includes a single step S3 executed parallelly to S1 and S2 only by the Mobile phones whose users subscribe the interactive service. During the step S1 the Service Centre 11 transmits on the broadcast channel (through the DVB-T Centre 1) the application that must reside in the Set-top box 40. In the successive step S2 the Set-top box 40 stores the received application. In the concurrent step S3 the mobile phones of the interactive service subscribers open an IP connection towards the site of the Service Centre 11 to subscribe and download the application (applet) that must reside in the mobile phone. As a variant of step S3 the end user, who has subscribed the application, downloads the application in his mobile phone from the Set-top box 40 through the Bluetooth interface. In such a case the Set-top box 40 in step S2 additionally stores the application that must reside in the mobile phone.

The Service usage section is subdivided in three sequential subsections respectively involving the DVB-T service (S4, S5), the Bluetooth interactivity (S6, S7, S8), and the GPRS transport (S9, S10, S11). The various steps are sufficiently described in the respective boxes of the figures although steps S3, S5 and S10 need some other clarifications. Steps S3 and S10 deal with the opening of a GPRS connection for packet data transfer, while step S5 concerns the MHP platform.

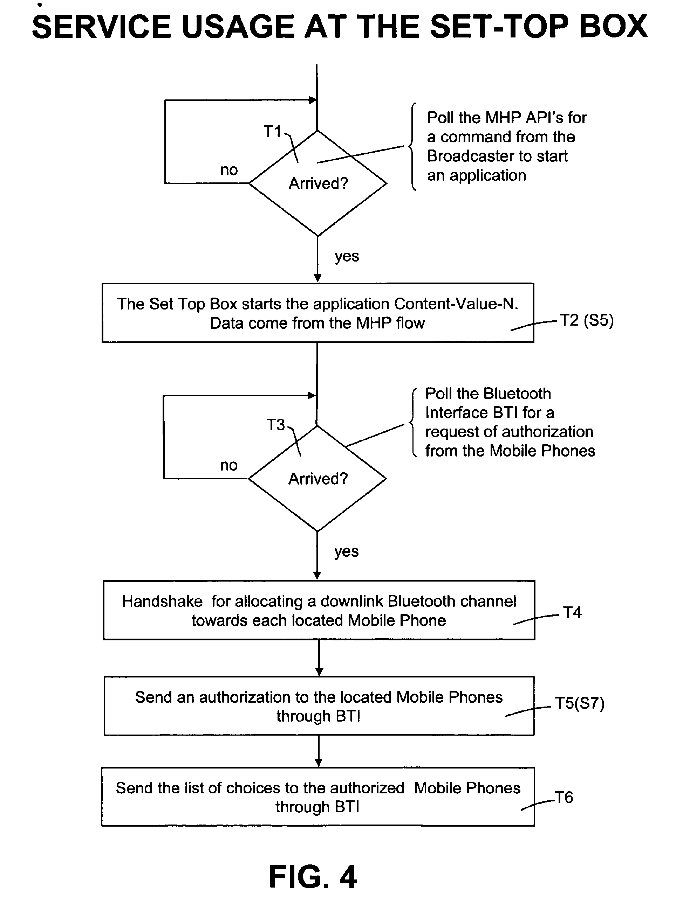

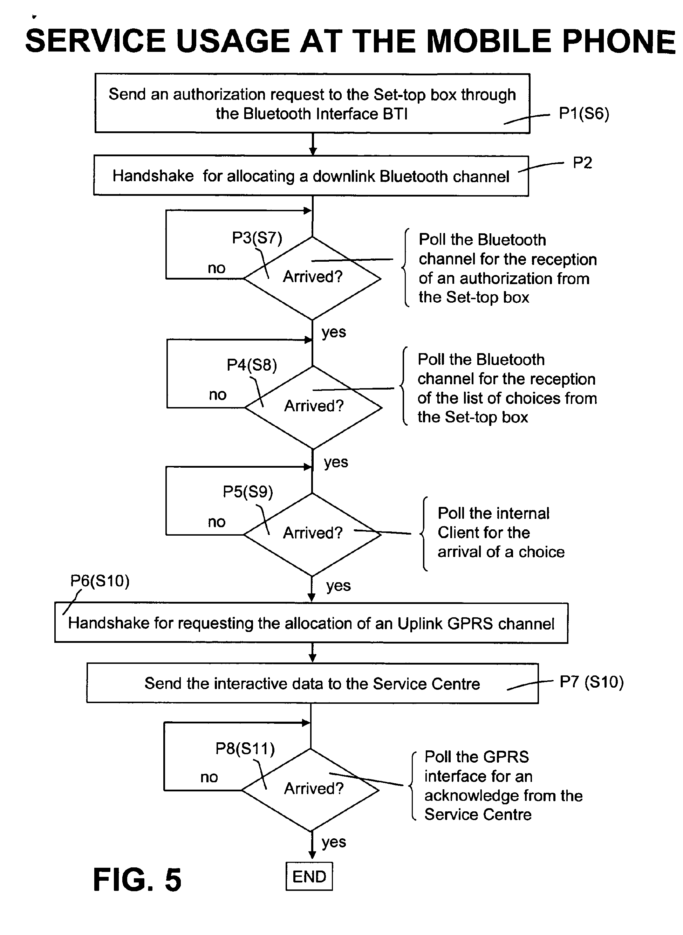

The Service usage section of **fig.3a** and **3b** is illustrated in **fig.4** and **fig.5** from the point-of-view of the Set-top box 40 and the Mobile phones 31, 32, 33 respectively. The MHP ® platform mentioned in step S5 corresponds to the DVB ® standard described in ETSI TS (Technical Specification) 102 812 V1.2.1 (2003-06). This TS contains:
- Detailing of Interactive and Internet Access Profiles.
- Stored application support.
- Application download via broadcast or interaction channels.
- DVB-Java extensions to better support international applications and smart cards.
- Specifications of DVB-HTML.
- Greater support for plug-ins.
- Support for bidirectional referencing between MHP content and Internet content.

MHP supports many kinds of applications, typical examples of which include the following:
- Electronic Programme Guides (EPG).
- Information Services - news / sport / stock ticker, "super teletext", etc.
- Application synchronized to TV content - score cards - local interactive games, etc.
- E-commerce and secure transactions.
- Education services, e-government, e-health, etc.
- E-mail and Internet.

Other information are downloadable from **www.MHP.org.**
On the basis of the above description some changes may be introduced in the exemplary embodiment by the skilled in the art without departing from the scope of the invention.

## Claims

1. Interactive video broadcasting system including:
- a Service Centre (1, 11) for broadcasting a composite television signal carrying TV programmes with associated specific interactive data;
- a television signal decoder (40), called set-top box, for decoding the interactive data associated to a television channel carrying a predetermined television signal;
- remote controlling means adapted to enable the user to make a choice from an interactive menu;
- first communication means inside said remote controlling means for short-range communicating with the set-top box (40);
- second communication means towards the Service Centre (1, 11) for transmitting to the Service Centre (11) the chosen information,
**characterized in that**:
- both said remote controlling means and said second communication means (GPI) are included in at least a cellular phone (31, 32, 33);
- said second communication means (GPI) are controlled by said at least a cellular phone to set up a packet data channel.

2. The system of claim 1, **characterized in that** said at least a cellular phone includes means for displaying said interactive menu.

3. The system of any preceding claim, **characterized in that** said composite television signal is digitally coded according to the DVB-T standard for terrestrial transmission.

4. The system of claim 3, **characterized in that** said first communication means (BTI) are implemented according to the Bluetooth ® communication standard.

5. The system of claim 3, **characterized in that** said first communication means (BTI) are implemented according to the Wi-Fl communication standard.

6. The system of any preceding claim, **characterized in that** both said set-top box (40) and said at least a cellular phone include memory means (21) for storing respective software applications devoted to the interactivity.

7. The system of claim 6, **characterized in that** said software application residing in the set-top box is downloaded via the air through the broadcasting channel.

8. The system of claim 6, **characterized in that** said software application residing in the at least a cellular phone is downloaded via Internet through the mobile radio network (34) and said second communication means (GPI).

9. The system of claim 6, **characterized in that** said software application residing in the at least a cellular phone is downloaded via the set-top box (40) through said first communication means (BTI).

10. The system of any preceding claim, **characterized in that** said at least a cellular phone includes a Subscriber Identity Module adapted to store use rights data acquired by the user for enjoying of interactive services through whatever set-top box (40).

11. A cellular phone (MT) with packet data communication capability, including processor and memory means, short-range wireless communication means (BTI), display and selection means, **characterized in that**:
- said short-range wireless communication means (BTI) are controlled by said processor and memory means for receiving/transmitting interactive data associated to a television signal;
- said display and selection means are controlled by said processor and memory means for displaying an interactive menu built up by said interactive data;
- said display and selection means are arranged for enabling the user to select at least an item of said interactive menu;
- said packet data communication capability is activated by said processor and memory means for transmitting the selected item information back to a Service Centre (11) automatically.

12. The cellular phone (MT) of claim 11, **characterized in that** use rights data supplied to the user to enjoy an opportunity selected from the displayed menu are stored in the SIM card.

13. Method for introducing interactivity in the broadcasting television system of claim 1, whereas said system includes a set-top box (40) and one or more cellular phones (31, 32, 33) having packet data communication capability (GPI) and short-range wireless communication capability (BTI) towards the set-top box (40), **characterized in that** includes the following sequential steps executed by the set-top box (40):
a) locating every cellular phone active in its neighbours (31, 32, 33);
b) authorizing, upon request, the user of a located cellular phone to join the community of the interactive service subscribers;
c) sending to the authorized cellular phones (31, 32, 33) a list of interactive data to be chosen by the users;
and the following sequential steps executed by each authorized cellular phone (31, 32, 33):
d) displaying a menu built up by said interactive data;
e) waiting for a chosen item from the displayed menu;
f) setting up a data communication channel towards the Service Provider (11) for transmitting the chosen item information;
g) waiting for a confirmation from the Service Provider (11).

14. The method of claim 13, **characterized in that** said authorizing step b) is preceded by a service provisioning step executed by the set-top box (40) and every interested cellular phone (31, 32, 33) for installing respective software applications devoted to manage their interactivity.
